# EUROPÄISCHE PATENTANMELDUNG

(11) **EP 3 839 820 A1**
(43) Veröffentlichungstag der Anmeldung: **23.06.2021**
(21) Anmeldenummer: 19217930.7
(22) Anmeldetag: 19.12.2019
(51) Int. Cl.: G06K 9/36, G06T 5/00, G06K 9/46

(54) **VERFAHREN UND VORRICHTUNG ZUR VERARBEITUNG VON DATEN**

(71) Anmelder: autoretouch GmbH, 71065 Sindelfingen (DE)
(72) Erfinder: Ciorapciu, Alex, 73730 Esslingen (DE); Baumann, Ulrich, 71083 Herrenberg (DE); Hartmann, Silvana, 70176 Stuttgart (DE); Lorentzen, Till, 70178 Stuttgart (DE)
(74) Vertreter: DREISS Patentanwälte PartG mbB

(57) **Zusammenfassung**

Verfahren zur Verarbeitung von Daten, insbesondere computerimplementiertes Verfahren zur Verarbeitung von mit einem Erzeugnis assoziierten Bilddaten, wobei das Verfahren aufweist: Bereitstellen von Eingangsdaten, wobei die Eingangsdaten Bilddaten wenigstens eines Erzeugnisses, insbesondere eines Kleidungsstücks, aufweisen, Bereitstellen von Konfigurationsdaten, die mehrere Verarbeitungsschritte für die Eingangsdaten charakterisieren, Ausführen der mehreren Verarbeitungsschritte mittels wenigstens einer Recheneinrichtung in Abhängigkeit der Konfigurationsdaten.

## Beschreibung

### Stand der Technik

Die Offenbarung betrifft ein Verfahren zur Verarbeitung von Daten, insbesondere ein computerimplementiertes Verfahren zur Verarbeitung von mit einem Erzeugnis assoziierten Bilddaten.

Die Offenbarung betrifft ferner eine Vorrichtung zur Verarbeitung von Daten, insbesondere zur Ausführung eines computerimplementierten Verfahrens zur Verarbeitung von mit einem Erzeugnis assoziierten Bilddaten.

### Offenbarung der Erfindung

Bevorzugte Ausführungsformen beziehen sich auf ein Verfahren zur Verarbeitung von Daten, wobei das Verfahren aufweist: Bereitstellen von Eingangsdaten, wobei die Eingangsdaten Bilddaten wenigstens eines Erzeugnisses, insbesondere eines Kleidungsstücks oder Accessoires, aufweisen, Bereitstellen von Konfigurationsdaten, die mehrere Verarbeitungsschritte für die Eingangsdaten charakterisieren, Ausführen der mehreren Verarbeitungsschritte mittels wenigstens einer Recheneinrichtung in Abhängigkeit der Konfigurationsdaten. Dies ermöglicht eine effiziente Ausführung z.B. von einer Mehrzahl von Bildbearbeitungsschritten, die bevorzugt automatisch (ohne Interaktion mit einem Benutzer) ausführbar sind. Auf diese Weise können bei weiteren bevorzugten Ausführungsformen z.B. komplette Abläufe der digitalen Bildverarbeitung effizient vorgegeben und/oder automatisiert werden, wodurch z.B. Rechenressourcen der Recheneinrichtung effizienter nutzbar sind.

Bei weiteren bevorzugten Ausführungsformen ist vorgesehen, dass das Verfahren als computerimplementiertes Verfahren ausgebildet ist, insbesondere als computerimplementiertes Verfahren zur Verarbeitung von mit einem Erzeugnis assoziierten Bilddaten, wobei insbesondere Schritte des computerimplementierten Verfahrens mittels der genannten Recheneinrichtung und/oder durch Komponenten hiervon ausführbar sind.

Bei weiteren bevorzugten Ausführungsformen ist vorgesehen, dass das Bereitstellen der Eingangsdaten aufweist: Empfangen, insbesondere mittels der Recheneinrichtung und/oder einer die Recheneinrichtung aufweisenden Vorrichtung, der Eingangsdaten von einer externen Einheit (z.B. Computerterminal) und/oder einem Benutzer (z.B. unter Verwendung einer, bevorzugt grafischen, Benutzeroberfläche), wobei die Eingangsdaten insbesondere wenigstens ein Digitalbild aufweisen.

Bei weiteren bevorzugten Ausführungsformen kann das wenigstens eine Digitalbild beispielsweise eine matrixförmige Anordnung von Bildelementen (englisch: pixels), z.B. organisiert in Reihen und Spalten, charakterisieren, wobei jedem Bildelement ein oder mehrere Intensitäts- bzw. Farbwerte zugeordnet sein können. Beispielsweise können bei weiteren bevorzugten Ausführungsformen dem wenigstens einen Digitalbild drei Farbkanäle, z.B. Rot, Grün, Blau, zugeordnet sein, wobei jedem Bildelement des Digitalbilds dementsprechend drei Farbwerte Rot, Grün, Blau zugeordnet sein können. Eine Auflösung der diskreten Farbwerte kann z.B. 8 (oder 10) bit betragen, wobei also jedem Farbkanal 256 (oder 1024) verschiedene Intensitätswerte zuweisbar sind. Bei weiteren bevorzugten Ausführungsformen kann das wenigstens eine Digitalbild auch eine hiervon abweichende Anzahl von Farbkanälen und/oder eine hiervon abweichende Anzahl von möglichen Intensitätswerten aufweisen. Beispielhaft sind bei weiteren bevorzugten Ausführungsformen auch Graustufenbilder denkbar, oder vier Kanäle aufweisende Bilder, die z.B. drei Farbkanäle (insbesondere z.B. RGB) aufweisen, und z.B. einen Transparenzkanal (Alpha-Kanal).

Bei weiteren bevorzugten Ausführungsformen ist vorgesehen, dass die Verarbeitungsschritte wenigstens zwei der folgenden Elemente aufweisen: a) Erkennen wenigstens eines Objekts ("Objekterkennung"), insbesondere des Erzeugnisses, insbesondere des Kleidungsstücks, und/oder einer mit dem Erzeugnis assoziierten Person, insbesondere einer Person, die das Kleidungsstück trägt, b) Freistellen wenigstens eines Objekts oder des wenigstens einen Objekts, c) Setzen wenigstens eines Objekts oder des wenigstens einen Objekts auf einen vorgebbaren Hintergrund, insbesondere auf einen weißen Hintergrund, d) Hinzufügen wenigstens eines Rahmens, insbesondere eines Rahmens um wenigstens ein Objekt oder das wenigstens eine Objekt, e) Hinzufügen wenigstens eines Schattens, insbesondere im Bereich von Schuhen einer bzw. der Person, beispielsweise unterhalb von Schuhen, f) Retuschieren, insbesondere von Teilen wenigstens eines Objekts oder des wenigstens einen Objekts, insbesondere Retuschieren einer Haut der Person, g) Erzeugen eines Farbschnipsels, h) Skalieren, insbesondere in Abhängigkeit einer Referenzvorlage ("Master"), i) Zuschneiden, insbesondere in Abhängigkeit einer oder der Referenzvorlage, j) Kalibrieren von Farben bzw. eines Farbraums, k) Abrunden bzw. Glätten von Kanten, insbesondere von Kanten eines bzw. des Objekts, l) Erzeugen von Ausgangsdaten, insbesondere wenigstens eines (bevorzugt digitalen) Ausgangsbilds, insbesondere in einem vorgebbaren Grafikformat, m) Ermitteln einer das Erzeugnis charakterisierenden Farbe, n) Zuordnen einer oder der das Erzeugnis charakterisierenden Farbe zu einer vorgebbaren Klassifikation, o) Ermitteln einer mit den Bilddaten assoziierten Perspektive, p) Erkennen und/oder Auflisten von Produkteigenschaften aus dem Bild, insbesondere Digitalbild, q) Einfügen eines, insbesondere vergleichsweise kleinen, Bildausschnittes und/oder Schriftzuges, insbesondere in Form eines Wasserzeichens und/oder eines Stickers.

Bei weiteren bevorzugten Ausführungsformen ist vorgesehen, dass das Retuschieren einer Haut der Person wenigstens eines der folgenden Elemente aufweist: a) Entfernen von Tätowierungen (Tattoos), b) Entfernen von Muttermalen, c) Entfernen von Narben, d) Weichzeichnen der Haut, e) Aufhellen der Haut und/oder Anpassen wenigstens eines Farbtones der Haut.

Bei weiteren bevorzugten Ausführungsformen sind auch ein oder mehrere der folgenden Elemente als Verarbeitungsschritte denkbar: f) Begradigen eines Saums eines Objekts, insbesondere Kleidungsstücks, g) Glättung von Falten (der Haut einer Person und/oder eines Kleidungsstücks), h) Einfärben des Erzeugnisses, insbesondere Kleidungsstücks, z.B. in eine vorgebbare Zielfarbe, i) Hinzufügen von künstlichen Schatten, j) Vergrößerung von wenigstens einem Bereich, k) Auswählen wenigstens eines Ausschnitts, l) Einfügen von Text und/oder wenigstens einem weiteren Bild.

Bei weiteren bevorzugten Ausführungsformen ist vorgesehen, dass die Verarbeitungsschritte automatisch, insbesondere ohne menschliche Interaktion, ausgeführt werden.

Bei weiteren bevorzugten Ausführungsformen ist vorgesehen, dass wenigstens einer der Verarbeitungsschritte, vorzugsweise mehrere der Verarbeitungsschritte, weiter vorzugsweise alle Verarbeitungsschritte, jeweils unter Verwendung eines, insbesondere künstlichen, neuronalen Netzwerks ausgeführt werden, insbesondere unter Verwendung eines künstlichen tiefen neuronalen Netzwerks.

Bei weiteren bevorzugten Ausführungsformen ist vorgesehen, dass die Konfigurationsdaten wenigstens eines der folgenden Elemente charakterisieren: a) eine Reihenfolge der Verarbeitungsschritte, b) einen oder mehrere Parameter für wenigstens einen der Verarbeitungsschritte, c) eine oder mehrere Eigenschaften von Ausgangsdaten, die bei dem Ausführen der mehreren Verarbeitungsschritte aus den Eingangsdaten erhalten werden.

Bei weiteren bevorzugten Ausführungsformen ist vorgesehen, dass das Verfahren weiter aufweist: Vorgeben eines Ablaufs der mehreren Verarbeitungsschritte in Abhängigkeit der Konfigurationsdaten, wobei der Ablauf eine Reihenfolge der mehreren Verarbeitungsschritte aufweist, und wobei insbesondere der Ablauf Einstellungen für wenigstens einen der mehreren Verarbeitungsschritte aufweist, und, optional, Ausführen des Ablaufs. Damit kann effizient ein Ablauf bzw. Workflow angegeben werden, der eine Mehrzahl von automatisch ausführbaren Verarbeitungsschritten insbesondere bezüglich einer (vorzugsweise digitalen) Bildverarbeitung der mit den Eingangsdaten assoziierten Bilddaten aufweist, wobei z.B. für die einzelnen Schritte bevorzugt jeweils ein tiefes künstliches neuronales Netzwerk verwendbar ist.

Bei weiteren bevorzugten Ausführungsformen kann ein wie vorstehend beschrieben erhaltener Ablauf, vorzugsweise automatisch, auf eine Vielzahl von verschiedenen Eingangsdaten mit jeweiligen Bilddaten angewendet werden, was die Effizienz und insbesondere Einsparung von Rechenressourcen und -zeit weiter steigert.

Bei weiteren bevorzugten Ausführungsformen ist vorgesehen, dass das Bereitstellen der Konfigurationsdaten wenigstens eines der folgenden Elemente aufweist: a) Empfangen, insbesondere mittels der Recheneinrichtung und/oder einer die Recheneinrichtung aufweisenden Vorrichtung, der Konfigurationsdaten von einer externen Einheit (z.B. weitere Recheneinrichtung, Personal-Computer oder Terminal oder dergleichen) und/oder einem Benutzer, b) Ausgeben einer Auswahl von Konfigurationsmöglichkeiten an einen Benutzer und/oder eine externe Einheit für wenigstens einen der mehreren Verarbeitungsschritte, wobei insbesondere das Ausgeben der Auswahl von Konfigurationsmöglichkeiten an den Benutzer das Erzeugen einer grafischen Benutzeroberfläche (GUI) aufweist.

Bei weiteren bevorzugten Ausführungsformen kann das Ausgeben der Auswahl von Konfigurationsmöglichkeiten an die externe Einheit z.B. die externe Einheit dazu veranlassen, eine GUI für einen Benutzer der externen Einheit bereitzustellen, mittels der dieser Benutzer z.B. die Konfigurationsdaten vorgeben bzw. eingeben kann. Dadurch ist z.B. eine effiziente Selektion von möglichen Verarbeitungsschritten der Eingangsdaten, insbesondere Bilddaten, ermöglicht, und/oder eine Vorgabe ihrer Reihenfolge, wodurch effizient ein oder mehrere Abläufe ("Workflows") definierbar sind.

Bei weiteren bevorzugten Ausführungsformen weist das Bereitstellen der Konfigurationsdaten auf: Auswerten der Eingangsdaten und, insbesondere automatisches, Ermitteln wenigstens eines Teils der Konfigurationsdaten in Abhängigkeit der Auswertung der Eingangsdaten. Dadurch kann eine Effizienz des Verfahrens weiter gesteigert werden.

Beispielsweise kann bei weiteren bevorzugten Ausführungsformen ein (weiteres) maschinelles Lernsystem wie z.B. wenigstens ein tiefes künstliches neuronales Netzwerk (DNN, deep neural network) vorgesehen sein, das z.B. mit Daten trainiert wird, welche bei der Ausführung des Verfahrens gemäß den Ausführungsformen entstehen bzw. verarbeitet werden (z.B. Eingangsdaten und/oder Konfigurationsdaten und/oder Ablauf und/oder Reihenfolge und/oder damit zusammenhängende Eingaben eines Benutzers). Ein auf diese Weise trainiertes DNN kann bei weiteren bevorzugten Ausführungsformen z.B. dazu verwendet werden, wenigstens Teile der Konfigurationsdaten und/oder die Reihenfolge bzw. den Ablauf, insbesondere automatisch, zu ermitteln, z.B. basierend auf den bei dem Training erlernten Informationen und/oder den Eingangsdaten.

Weitere bevorzugten Ausführungsformen beziehen sich auf eine Vorrichtung zur Ausführung des Verfahrens gemäß den Ausführungsformen.

Bei weiteren bevorzugten Ausführungsformen ist vorgesehen, dass die Vorrichtung wenigstens eines der folgenden Elemente aufweist: a) eine wenigstens einen Rechenkern aufweisende Recheneinrichtung, b) eine Speichereinrichtung, c) eine, vorzugsweise bidirektionale, Schnittstelle, insbesondere Benutzerschnittstelle und/oder Datenschnittstelle.

Weitere bevorzugte Ausführungsformen beziehen sich auf ein computerlesbares Speichermedium, umfassend Befehle, insbesondere in Form eines Computerprogramms, die bei der Ausführung durch einen Computer diesen veranlassen, das Verfahren gemäß den Ausführungsformen auszuführen.

Weitere bevorzugte Ausführungsformen beziehen sich auf ein Computerprogramm, umfassend Befehle, die bei der Ausführung des Programms durch einen Computer diesen veranlassen, das Verfahren gemäß den Ausführungsformen auszuführen.

Weitere bevorzugte Ausführungsformen beziehen sich auf ein Datenträgersignal, das das Computerprogramm gemäß den Ausführungsformen überträgt.

Weitere bevorzugte Ausführungsformen beziehen sich auf eine Verwendung des Verfahrens gemäß den Ausführungsformen und/oder der Vorrichtung gemäß den Ausführungsformen und/oder des Computerprogramms gemäß den Ausführungsformen für wenigstens eines der folgenden Elemente: a) insbesondere automatische bzw. zumindest teilweise automatisierte, Verarbeitung von mit einem Erzeugnis assoziierten Bilddaten, b) Bereitstellung eines Ablaufs für eine Verarbeitung von mit einem Erzeugnis assoziierten Bilddaten, c) zumindest zeitweises und/oder teilweises Ersetzen eines manuellen Bildbearbeitungsprozesses (und/oder Überprüfen oder Nachvollziehen eines manuellen Bildbearbeitungsprozesses), d) Bereitstellung von Produktbildern, insbesondere bezüglich Kleidungsstücken und/oder Accessoires, insbesondere für Onlinekataloge und/oder elektronische Produktübersichten, e) Bereitstellung, insbesondere automatische Erzeugung von, Farbschnipseln, f) Verkettung von Bildverarbeitungsschritten unter Verwendung verschiedener, insbesondere künstlicher, insbesondere tiefer, neuronaler Netzwerke.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
- Fig. 1: schematisch ein vereinfachtes Flussdiagramm eines Verfahrens gemäß bevorzugten Ausführungsformen,
- Fig. 2: schematisch ein vereinfachtes Blockdiagramm einer Vorrichtung gemäß weiteren bevorzugten Ausführungsformen,
- Fig. 3A: schematisch weitere Aspekte eines Verfahrens gemäß weiteren bevorzugten Ausführungsformen,
- Fig. 3B: schematisch weitere Aspekte eines Verfahrens gemäß weiteren bevorzugten Ausführungsformen,
- Fig. 3C: schematisch weitere Aspekte eines Verfahrens gemäß weiteren bevorzugten Ausführungsformen,
- Fig. 4: schematisch ein künstliches neuronales Netzwerk gemäß weiteren bevorzugten Ausführungsformen,
- Fig. 5A, Fig. 5B: jeweils schematisch Bilddaten gemäß weiteren bevorzugten Ausführungsformen,
- Fig. 6: schematisch Bilddaten gemäß weiteren bevorzugten Ausführungsformen,
- Fig. 7: schematisch ein vereinfachtes Blockdiagramm gemäß weiteren bevorzugten Ausführungsformen,
- Fig. 8A, Fig. 8B: jeweils schematisch ein vereinfachtes Blockdiagramm gemäß weiteren bevorzugten Ausführungsformen, und
- Fig. 9A, Fig. 9B: jeweils schematisch ein vereinfachtes Blockdiagramm gemäß weiteren bevorzugten Ausführungsformen.

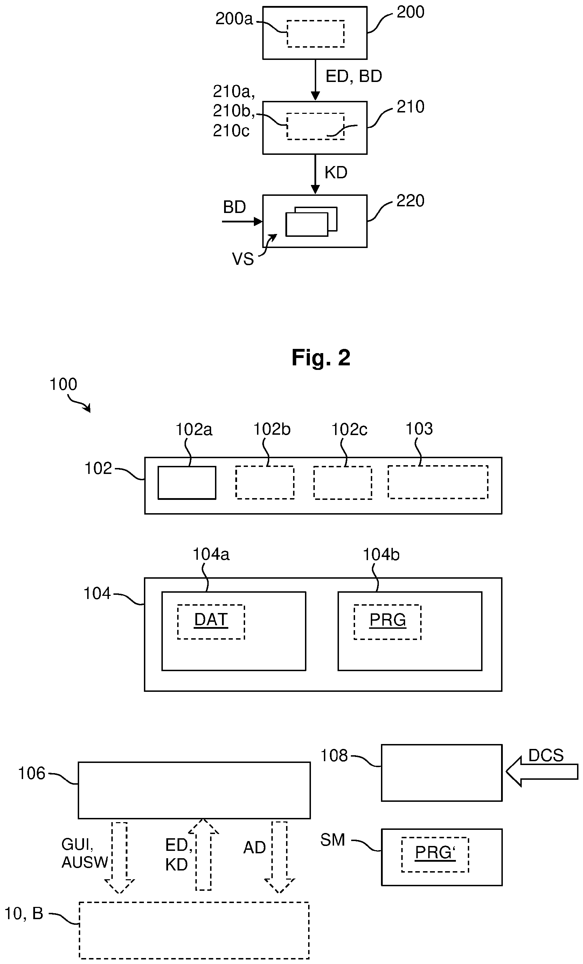

Figur 1 zeigt schematisch ein vereinfachtes Flussdiagramm eines Verfahrens zur Verarbeitung von Daten gemäß bevorzugten Ausführungsformen. Bevorzugt ist das Verfahren als computerimplementiertes Verfahren ausgebildet, insbesondere als computerimplementiertes Verfahren zur Verarbeitung von mit einem Erzeugnis, z.B. einem Kleidungsstück oder Accessoire, assoziierten Bilddaten.

Das Verfahren gemäß Figur 1 weist die folgenden Schritte auf: Bereitstellen 200 von Eingangsdaten ED, wobei die Eingangsdaten ED Bilddaten BD wenigstens eines Erzeugnisses, insbesondere eines Kleidungsstücks oder Accessoires, aufweisen, Bereitstellen 210 von Konfigurationsdaten KD, die mehrere Verarbeitungsschritte VS für die Eingangsdaten ED (bzw. deren Bilddaten BD) charakterisieren, Ausführen 220 der mehreren Verarbeitungsschritte VS mittels wenigstens einer Recheneinrichtung 102 (nicht in Fig. 1 gezeigt, s. unten z.B. Fig. 2) in Abhängigkeit der Konfigurationsdaten KD. Dies ermöglicht eine effiziente Ausführung z.B. von einer Mehrzahl von Bildbearbeitungsschritten VS, die bevorzugt automatisch (ohne Interaktion mit einem Benutzer) ausführbar sind.

Figur 2 zeigt schematisch ein vereinfachtes Blockdiagramm einer Vorrichtung 100 gemäß weiteren bevorzugten Ausführungsformen, wobei die Vorrichtung 100 zur Ausführung des Verfahrens gemäß bevorzugten Ausführungsformen ausgebildet ist.

Bei weiteren bevorzugten Ausführungsformen ist vorgesehen, dass das Verfahren gemäß Figur 1, wie vorstehend bereits angedeutet, als computerimplementiertes Verfahren ausgebildet ist, insbesondere als computerimplementiertes Verfahren zur Verarbeitung von mit einem Erzeugnis assoziierten Bilddaten BD, wobei insbesondere die Schritte 200, 210, 220 des computerimplementierten Verfahrens mittels der genannten Recheneinrichtung 102 (Fig. 2) der Vorrichtung 100 und/oder durch Komponenten hiervon ausführbar sind.

Bei weiteren bevorzugten Ausführungsformen ist vorgesehen, dass die Vorrichtung 100 wenigstens eines der folgenden Elemente aufweist: a) eine wenigstens einen Rechenkern 102a, 102b, 102c aufweisende Recheneinrichtung 102, b) eine Speichereinrichtung 104, c) eine, vorzugsweise bidirektionale, 106 Schnittstelle, insbesondere Benutzerschnittstelle und/oder Datenschnittstelle (z.B. zum Empfang der Eingangsdaten ED und/oder Konfigurationsdaten KD, und/oder zur Ausgabe von Ausgangsdaten AD).

Vorliegend weist die Recheneinrichtung 102 der Vorrichtung 100 beispielhaft drei Rechenkerne 102a, 102b, 102c auf, sowie optional einen Grafikprozessor 103 oder einen Tensorprozessor, der eine besonders effiziente Ausführung bzw. Auswertung von (künstlichen) neuronalen Netzwerken (KNN), z.B. für einzelne Verarbeitungsschritte VS (Fig. 1), ermöglicht.

Bei weiteren bevorzugten Ausführungsformen weist die Vorrichtung 100 einen flüchtigen Speicher 104a, z.B. Arbeitsspeicher (RAM, random access memory), auf, in dem zumindest zeitweise Daten DAT für einen Betrieb der Vorrichtung 100, insbesondere auch zur Ausführung des Verfahrens gemäß den Ausführungsformen, speicherbar sind. Die Daten DAT können beispielsweise zumindest zeitweise die Eingangsdaten ED und/oder die Bilddaten BD und/oder die Konfigurationsdaten KD und/oder daraus abgeleitete Daten und/oder Teile hiervon umfassen. Weiter beispielsweise können die Daten DAT zumindest zeitweise auch Daten wenigstens eines KNN (z.B. Gewichte, Bias-Werte, Parameter von Aktivierungsfunktionen usw.) aufweisen. Bei weiteren bevorzugten Ausführungsformen können zumindest Teile der Daten DAT auch persistiert werden, indem sie z.B. in einen nichtflüchtigen Speicher 104b kopiert bzw. verschoben werden.

Bei weiteren bevorzugten Ausführungsformen weist die Vorrichtung 100 einen nichtflüchtigen Speicher 104b, z.B. ein Flash-EEPROM, auf, in dem z.B. ein Computerprogramm PRG für einen Betrieb der Vorrichtung 100, insbesondere auch zur Ausführung des Verfahrens gemäß den Ausführungsformen, speicherbar ist. Wie vorstehend erwähnt können zumindest zeitweise auch wenigstens Teile der Daten DAT des RAM 104a in dem nichtflüchtigen Speicher 104b gespeichert werden.

Weitere bevorzugte Ausführungsformen beziehen sich auf ein optionales computerlesbares Speichermedium SM, umfassend Befehle, insbesondere in Form eines Computerprogramms PRG', die bei der Ausführung durch einen Computer 102 diesen veranlassen, das Verfahren gemäß den Ausführungsformen auszuführen.

Weitere bevorzugte Ausführungsformen beziehen sich auf ein Computerprogramm PRG, PRG', umfassend Befehle, die bei der Ausführung des Programms durch einen Computer 102 diesen veranlassen, das Verfahren gemäß den Ausführungsformen auszuführen.

Weitere bevorzugte Ausführungsformen beziehen sich auf ein optionales Datenträgersignal DCS, das das Computerprogramm PRG, PRG' gemäß den Ausführungsformen überträgt. Für den Empfang des Datenträgersignals DCS kann die Vorrichtung 100 bei weiteren bevorzugten Ausführungsformen ggf. eine (weitere), bevorzugt bidirektionale, Datenschnittstelle 108 aufweisen. Alternativ ist das Datenträgersignal DCS auch über die Schnittstelle 106 übertragbar.

Bei weiteren bevorzugten Ausführungsformen ist vorgesehen, dass das Bereitstellen 200 (Fig. 1) der Eingangsdaten ED aufweist: Empfangen 200a (vgl. auch den Pfeil ED aus Fig. 2), insbesondere mittels der Recheneinrichtung 102 (Fig. 2) und/oder einer die Recheneinrichtung aufweisenden Vorrichtung 100, der Eingangsdaten ED von einer externen Einheit 10 (z.B. Computerterminal) und/oder einem Benutzer B (z.B. unter Verwendung einer, bevorzugt grafischen, Benutzeroberfläche), wobei die Eingangsdaten ED insbesondere wenigstens ein Digitalbild aufweisen.

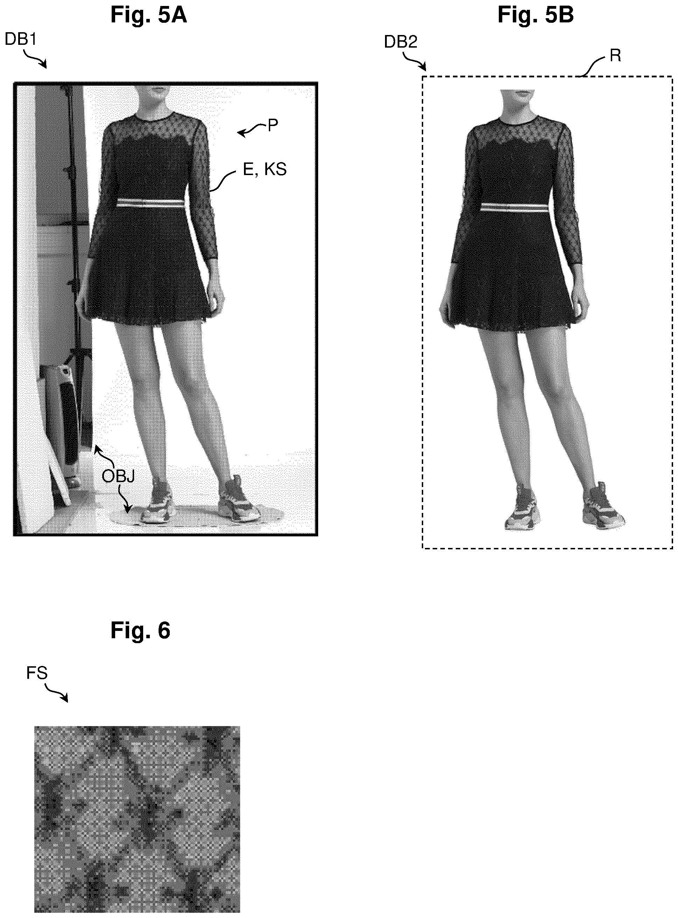

Beispielhaft zeigt Fig. 5A schematisch ein erstes Digitalbild DB1, wie es bei weiteren bevorzugten Ausführungsformen z.B. Teil der Eingangsdaten ED bzw. deren Bilddaten BD sein kann. Das erste Digitalbild DB1 enthält eine (teilweise) Abbildung einer Person P, die ein Erzeugnis E, vorliegend beispielhaft ein Kleidungsstück KS, präsentiert. Zusätzlich enthält das erste Digitalbild DB1 weitere Objekte OBJ, die z.B. für eine weitere Verwendung des Digitalbilds DB1 (z.B. Werbemaßnahme bezüglich des präsentierten Kleidungsstücks KS) an sich unerwünscht sind, jedoch ggf. bei einem Produktionsprozess des Digitalbilds DB1 (z.B. Foto-Shooting) mit auf dem Digitalbild DB1 abgebildet werden.

Bei weiteren bevorzugten Ausführungsformen kann das Verfahren gemäß bevorzugten Ausführungsformen verwendet werden, um das Digitalbild DB1 mittels mehrerer Verarbeitungsschritte VS (Fig. 1), vorzugsweise automatisch, zu verarbeiten, insbesondere z.B. um einen Gebrauchsnutzen des Digitalbilds DB1 für einen angestrebten Zweck, z.B. die beispielhaft genannte Werbemaßnahme bezüglich des präsentierten Kleidungsstücks KS, zu steigern. Dadurch ist eine besonders effiziente und Ressourcen schonende (Weiter-)Verarbeitung des ersten Digitalbilds DB1 ermöglicht, die u.a. dazu beitragen kann, die Qualität eines auf diese Weise erhaltenen zweiten Digitalbilds DB2, vgl. Fig. 5B, zu steigern bzw. einem Qualitätsverlust durch zahlreiche einzelne, manuelle, Verarbeitungsschritte entgegenzuwirken, wie dies bei konventionellen Ansätzen der Fall ist.

Bei weiteren bevorzugten Ausführungsformen kann das wenigstens eine Digitalbild DB1, DB2 beispielsweise eine matrixförmige Anordnung von Bildelementen (englisch: pixels), z.B. organisiert in Reihen und Spalten, charakterisieren, wobei jedem Bildelement ein oder mehrere Intensitäts- bzw. Farbwerte zugeordnet sein können.

Beispielsweise können bei weiteren bevorzugten Ausführungsformen dem wenigstens einen Digitalbild DB1, DB2 drei Farbkanäle, z.B. Rot, Grün, Blau, zugeordnet sein, wobei jedem Bildelement des Digitalbilds dementsprechend drei Farbwerte Rot, Grün, Blau zugeordnet sein können. Eine Auflösung der bevorzugt diskreten Farbwerte kann z.B. 8 (oder 10) bit betragen, wobei jedem Farbkanal 256 (oder 1024) verschiedene Intensitätswerte zuweisbar sind. Bei weiteren bevorzugten Ausführungsformen kann das wenigstens eine Digitalbild DB1, DB2 auch eine hiervon abweichende Anzahl von Farbkanälen und/oder eine hiervon abweichende Anzahl von möglichen Intensitätswerten aufweisen. Beispielhaft sind bei weiteren bevorzugten Ausführungsformen auch Graustufenbilder denkbar.

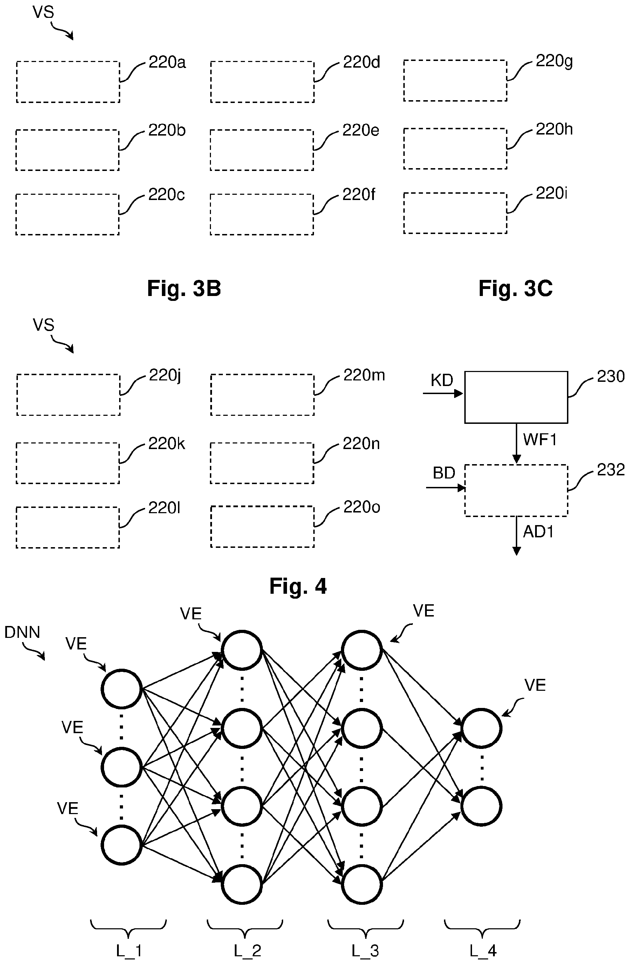

Bei weiteren bevorzugten Ausführungsformen ist vorgesehen, dass die Verarbeitungsschritte VS (Fig. 1) wenigstens zwei der folgenden Elemente aufweisen, s. auch Fig. 3A: a) Erkennen 220a wenigstens eines Objekts ("Objekterkennung"), insbesondere des Erzeugnisses E, insbesondere des Kleidungsstücks KS, und/oder einer mit dem Erzeugnis assoziierten Person P, insbesondere einer Person P, die das Kleidungsstück KS trägt (und/oder Erkennen von anderen Objekten OBJ, die ggf. aus den Bilddaten BD, z.B. dem Digitalbild DB1, zu entfernen sind), b) Freistellen 220b wenigstens eines Objekts E, KS, P oder des wenigstens einen Objekts, c) Setzen 220c wenigstens eines Objekts E, KS, P oder des wenigstens einen Objekts auf einen vorgebbaren Hintergrund, insbesondere auf einen weißen Hintergrund, d) Hinzufügen 220d wenigstens eines Rahmens R (Fig. 5B), insbesondere eines Rahmens um wenigstens ein Objekt KS, P oder das wenigstens eine Objekt, e) Hinzufügen 220e wenigstens eines Schattens (nicht gezeigt), insbesondere im Bereich von Schuhen einer bzw. der Person P, beispielsweise unterhalb von den Schuhen, f) Retuschieren 220f, insbesondere von Teilen wenigstens eines Objekts E, KS oder des wenigstens einen Objekts, insbesondere Retuschieren einer Haut der Person P, g) Erzeugen eines Farbschnipsels FS (Fig. 6), h) Skalieren 220h (Fig. 3A), insbesondere in Abhängigkeit einer Referenzvorlage ("Master"), i) Zuschneiden 220i, insbesondere in Abhängigkeit einer oder der Referenzvorlage, j) Kalibrieren 220j (Fig. 3B) von Farben bzw. eines Farbraums, k) Abrunden 220k bzw. Glätten von Kanten, insbesondere von Kanten eines bzw. des Objekts KS, bzw. der Person P, l) Erzeugen 220l von Ausgangsdaten AD (Fig. 2), insbesondere wenigstens eines (bevorzugt digitalen) Ausgangsbilds DB2 (Fig. 5B), insbesondere in einem vorgebbaren Grafikformat, m) Ermitteln 220m (Fig. 3B) einer das Erzeugnis E, KS charakterisierenden Farbe, n) Zuordnen 220n einer oder der das Erzeugnis E; KS charakterisierenden Farbe zu einer vorgebbaren Klassifikation, o) Ermitteln 220o einer mit den Bilddaten BD assoziierten Perspektive, p) Erkennen und/oder Auflisten von Produkteigenschaften aus dem Bild, insbesondere Digitalbild, q) Einfügen eines, insbesondere vergleichsweise kleinen, Bildausschnittes und/oder Schriftzuges, insbesondere in Form eines Wasserzeichens und/oder eines Stickers.

Bei weiteren bevorzugten Ausführungsformen ist vorgesehen, dass das Retuschieren 220f (Fig. 3A) einer Haut der Person P wenigstens eines der folgenden Elemente aufweist: a) Entfernen von Tätowierungen (Tattoos), b) Entfernen von Muttermalen, c) Entfernen von Narben, d) Weichzeichnen der Haut, e) Aufhellen der Haut und/oder Anpassen wenigstens eines Farbtones der Haut.

Bei weiteren bevorzugten Ausführungsformen sind auch ein oder mehrere der folgenden Elemente als Verarbeitungsschritte denkbar: f) Begradigen eines Saums eines Objekts, insbesondere Kleidungsstücks KS, g) Glättung von Falten (der Haut einer Person P und/oder eines Kleidungsstücks KS), h) Einfärben des Erzeugnisses E, insbesondere Kleidungsstücks KS, z.B. in eine vorgebbare Zielfarbe, i) Hinzufügen von künstlichen Schatten, j) Vergrößerung von wenigstens einem Bereich, k) Auswählen wenigstens eines Ausschnitts, l) Einfügen von Text und/oder wenigstens einem weiteren Bild.

Bei weiteren bevorzugten Ausführungsformen ist vorgesehen, dass die Verarbeitungsschritte automatisch, insbesondere ohne menschliche Interaktion, ausgeführt werden, beispielsweise mittels der Vorrichtung 100 (Fig. 2) und/oder ihrer Recheneinrichtung 102, z.B. unter zumindest zeitweiser Steuerung durch das Computerprogramm PRG, PRG'.

Bei weiteren bevorzugten Ausführungsformen ist vorgesehen, dass wenigstens einer der Verarbeitungsschritte VS (Fig. 1, 3A, 3B), vorzugsweise mehrere der Verarbeitungsschritte VS, weiter vorzugsweise alle Verarbeitungsschritte VS, jeweils unter Verwendung eines, insbesondere künstlichen, neuronalen Netzwerks ausgeführt werden, insbesondere unter Verwendung eines künstlichen tiefen neuronalen Netzwerks (DNN, deep neural network).

Figur 4 zeigt hierzu schematisch ein beispielhaftes DNN, das eine Eingabeschicht (englisch: input layer) L_1 und eine Ausgabeschicht L_4 sowie vorliegend beispielhaft zwei zwischen der Eingabeschicht L_1 und der Ausgabeschicht L_4 angeordnete weitere Schichten L_2, L_3 (englisch: hidden layers) aufweist.

Jede der Schichten L_1, L_2, L_3, L_4 weist bevorzugt ein oder mehrere Verarbeitungselemente (sog. künstliche Neuronen) auf, die in Fig. 4 der Übersichtlichkeit halber kollektiv mit dem Bezugszeichen VE bezeichnet sind. Die in Fig. 4 vertikal angeordneten Punkte ("...") zwischen benachbarten Verarbeitungselementen VE einer Schicht geben beispielhaft an, dass bei weiteren bevorzugten Ausführungsformen jeweils ggf. eine Vielzahl weiterer, nicht in Fig. 4 gezeigter, Verarbeitungselemente VE in der jeweiligen Schicht vorgesehen sein kann. Auch können bei weiteren bevorzugten Ausführungsformen mehr als vier Schichten L_1, .., L_4 vorgesehen sein.

Beispielsweise kann die Eingabeschicht L_1 bei weiteren bevorzugten Ausführungsformen eine erste Anzahl n1 von Verarbeitungselementen VE aufweisen, die z.B. einer Anzahl der Bildelemente eines zu verarbeitenden Digitalbilds DB1 entspricht (z.B.: n1 = 1024 ^{∗} 2048 = 2097152), oder die der Anzahl der Bildelemente des zu verarbeitenden Digitalbilds DB1, multipliziert mit der Anzahl n2 von Farbkanälen, entspricht (z.B.: n1 ^{∗} n2 = 1024 ^{∗} 2048 ^{∗} 3 = 6291456). Auf diese Weise kann z.B. jedes Verarbeitungselement VE der Eingabeschicht L_1 einem Pixel bzw. Subpixel (Teil des Pixels, der einem der möglichen Farbkanäle zugeordnet ist), zugeordnet werden. Mit anderen Worten ist bei weiteren bevorzugten Ausführungsformen ein zu verarbeitendes Digitalbild DB1 dem DNN z.B. in Form eines Spaltenvektors zuführbar, wobei der Spaltenvektor eine Vielzahl von Komponenten aufweist, die den o.g. Produkten n1 bzw. n1 ^{∗} n2 entspricht. Vergleichbares kann bei weiteren bevorzugten Ausführungsformen z.B. auch für die Ausgabeschicht L_4 gelten. Man sieht somit, dass bei weiteren bevorzugten Ausführungsformen wenigstens die Eingabeschicht und/oder die Ausgabeschicht des DNN eine vergleichsweise große Zahl von Verarbeitungselementen VE aufweisen kann bzw. können. Vergleichbares gilt bei weiteren bevorzugten Ausführungsformen auch für die inneren Schichten (hidden layers) L_2, L_3.

Bei weiteren bevorzugten Ausführungsformen kann die Topologie des DNN auf die Besonderheiten des jeweiligen Verarbeitungsschritts VS, vgl. z.B. Fig. 3A, 3B, angepasst sein.

Bei weiteren bevorzugten Ausführungsformen kann jedes der Verarbeitungselemente VE des DNN dazu ausgebildet sein, ein oder mehrere Eingangssignale zu empfangen, z.B. von einer vorangehenden (und/oder einer anderen) Schicht des DNN bzw. einem oder mehreren Verarbeitungselemente(n) VE der betreffenden Schicht(en), und das bzw. die Eingangssignale zu gewichten und/oder mit einem Bias zu versehen und/oder zu skalieren und/oder zu summieren und/oder in sonstiger Weise zu modifizieren.

Bei weiteren bevorzugten Ausführungsformen kann jedes der Verarbeitungselemente VE des DNN dazu ausgebildet sein, eine Aktivierungsfunktion (z.B. ReLU, rectified linear unit, Sigmoid, usw.) auszuwerten, um ein Ausgangssignal für ein spezifisches Verarbeitungselement VE zu ermitteln, in Abhängigkeit des bzw. der Eingangssignale und/oder von einem oder mehreren daraus ableitbaren Signalen. Bei weiteren bevorzugten Ausführungsformen können die Ausgangssignale der Verarbeitungselemente VE z.B. als Eingangssignale für nachfolgende Schichten des DNN verwendet werden, und/oder als Ausgangssignale des DNN, insbesondere im Falle von Verarbeitungselementen VE der Ausgabeschicht L_4.

Bei weiteren bevorzugten Ausführungsformen können während eines Trainings des DNN die genannten Gewichte und/oder Bias-Werte z.B. verändert werden, insbesondere um mittels des DNN eine gewünschte i.d.R. nichtlineare Funktionsapproximation für bestimmte Eingangssignale (vorliegend z.B. in Form von Digitalbildern) zu erzielen. Nach Abschluss des Trainings, d.h. in einem regulären Betrieb des DNN, z.B. zur Ausführung der Verarbeitungsschritte VS gemäß Schritt 220 aus Fig. 1, können die genannten Gewichte und/oder Bias-Werte z.B. konstant gehalten werden.

Bei weiteren bevorzugten Ausführungsformen können die Verarbeitungselemente VE bzw. ihre Funktion unter Verwendung der Vorrichtung 100 bzw. von Komponenten 102, 104, PRG der Vorrichtung 100 implementiert werden. Beispielsweise kann bei weiteren bevorzugten Ausführungsformen ein optionaler Grafik- oder Tensorprozessor 103 der Vorrichtung 100 verwendet werden, um wenigstens ein DNN auszuführen bzw. auszuwerten, z.B. für einen oder mehrere der Verarbeitungsschritte VS (Fig. 1) gemäß bevorzugten Ausführungsformen. Bei weiteren bevorzugten Ausführungsformen können auch unterschiedliche (Typen von) DNN, z.B. zeitlich aufeinander folgend oder zumindest zeitweise auch parallel zueinander, ausgeführt werden, wobei die unterschiedliche (Typen von) DNN z.B. unterschiedlichen Verarbeitungsschritten VS zugeordnet sind.

Bei weiteren bevorzugten Ausführungsformen kann das DNN beispielsweise auch als CNN (convolutional neural network), also als ein auf Faltungsoperationen basierendes KNN, ausgebildet sein.

Bei weiteren bevorzugten Ausführungsformen kann auch vorgesehen sein, dass extern zu der Vorrichtung 100 angeordneten Komponenten, z.B. Teile eines Cloud-Computing-Systems oder Edge-Computing-Systems (nicht gezeigt), verwendet werden, um das wenigstens eine DNN auszuführen bzw. auszuwerten. Bei weiteren bevorzugten Ausführungsformen kann z.B. auch wenigstens ein System bzw. Verfahren zur Virtualisierung von Betriebssystemen und/oder Containern (z.B. Docker-Container) verwendet werden, um wenigstens Teile des Computerprogramms PRG (Fig. 2) auszuführen, welche z.B. die Ausführung bzw. Auswertung wenigstens eines DNN zum Gegenstand haben. Ein Datenaustausch der Vorrichtung 100 mit externen Komponenten z.B. des Cloud (bzw. Edge)-Computing-Systems kann bei weiteren bevorzugten Ausführungsformen z.B. mittels der Datenschnittstelle 106 und/oder 108 erfolgen.

Bei weiteren bevorzugten Ausführungsformen ist vorgesehen, dass die Konfigurationsdaten KD (Fig. 1) wenigstens eines der folgenden Elemente charakterisieren: a) eine Reihenfolge der Verarbeitungsschritte VS, b) einen oder mehrere Parameter für wenigstens einen der Verarbeitungsschritte VS, c) eine oder mehrere Eigenschaften von Ausgangsdaten AD (Fig. 2), die bei dem Ausführen der mehreren Verarbeitungsschritte aus den Eingangsdaten erhalten werden. Durch die Reihenfolge der Verarbeitungsschritte VS wird bei weiteren bevorzugten Ausführungsformen z.B. festgelegt, welche Ausgangsdaten eines bestimmten Verarbeitungsschritts als Eingangsdaten für einen gemäß der Reihenfolge nachfolgenden Verarbeitungsschritt genutzt werden.

Bei weiteren bevorzugten Ausführungsformen ist vorgesehen, dass das Verfahren weiter aufweist, vgl. Fig. 3C: Vorgeben 230 eines Ablaufs WF1 ("Workflow") der mehreren Verarbeitungsschritte VS in Abhängigkeit der Konfigurationsdaten KD, wobei der Ablauf WF1 eine Reihenfolge der mehreren Verarbeitungsschritte VS aufweist, und wobei insbesondere der Ablauf WF1 Einstellungen für wenigstens einen der mehreren Verarbeitungsschritte VS aufweist, und, optional, Ausführen 232 des Ablaufs WF1, wobei aus den Bilddaten BD (z.B. Digitalbild DB1 gemäß Fig. 5A) z.B. entsprechende Ausgangsdaten AD1 erhalten werden, z.B. in Form eines (zweiten) Digitalbilds DB2 (Fig. 5B).

Damit kann effizient ein Ablauf bzw. Workflow WF1 angegeben werden, der eine Mehrzahl von automatisch ausführbaren Verarbeitungsschritten VS insbesondere bezüglich einer (vorzugsweise digitalen) Bildverarbeitung der mit den Eingangsdaten ED assoziierten Bilddaten BD, DB1 aufweist, wobei z.B. für die einzelnen Schritte bevorzugt jeweils ein tiefes künstliches neuronales Netzwerk DNN verwendbar ist.

Bei weiteren bevorzugten Ausführungsformen ist vorgesehen, dass das Bereitstellen 210 (Fig. 1) der Konfigurationsdaten KD wenigstens eines der folgenden Elemente aufweist: a) Empfangen 210a, insbesondere mittels der Recheneinrichtung 102 und/oder einer die Recheneinrichtung 102 aufweisenden Vorrichtung 100, der Konfigurationsdaten KD von einer externen Einheit (z.B. weitere Recheneinrichtung 10, Personal-Computer oder Terminal oder dergleichen) und/oder einem Benutzer B (Fig. 2), b) Ausgeben 210b (Fig. 1) einer Auswahl AUSW (Fig. 2) von Konfigurationsmöglichkeiten an einen bzw. den Benutzer B und/oder die externe Einheit 10 für wenigstens einen der mehreren Verarbeitungsschritte VS, wobei insbesondere das Ausgeben 210b der Auswahl von Konfigurationsmöglichkeiten an den Benutzer B das Erzeugen einer grafischen Benutzeroberfläche GUI (Fig. 2) aufweist.

Bei weiteren bevorzugten Ausführungsformen kann das Ausgeben 210b der Auswahl AUSW von Konfigurationsmöglichkeiten an die externe Einheit 10 (Fig. 2) z.B. die externe Einheit dazu veranlassen, ein GUI für einen Benutzer B der externen Einheit bereitzustellen, mittels der dieser Benutzer z.B. die Konfigurationsdaten KD vorgeben bzw. eingeben kann. Dadurch ist z.B. eine effiziente Selektion von möglichen Verarbeitungsschritten VS der Eingangsdaten ED, insbesondere Bilddaten BD, ermöglicht, und/oder eine Vorgabe ihrer Reihenfolge.

Bei weiteren bevorzugten Ausführungsformen weist das Bereitstellen 210 (Fig. 1) der Konfigurationsdaten KD auf: Auswerten 210c der Eingangsdaten ED und, insbesondere automatisches (ohne Interaktion mit einem Benutzer B), Ermitteln wenigstens eines Teils der Konfigurationsdaten KD in Abhängigkeit der Auswertung 210c der Eingangsdaten ED. Dadurch kann eine Effizienz des Verfahrens weiter gesteigert werden.

Beispielsweise kann bei weiteren bevorzugten Ausführungsformen ein (weiteres) maschinelles Lernsystem wie z.B. wenigstens ein tiefes künstliches neuronales Netzwerk (DNN, deep neural network), vgl. das beispielhaft in Fig. 4 abgebildete und bereits vorstehend beschriebene DNN, vorgesehen sein, das z.B. mit Daten trainiert wird, welche bei der Ausführung des Verfahrens gemäß den Ausführungsformen entstehen bzw. verarbeitet werden (z.B. Eingangsdaten ED und/oder Konfigurationsdaten KD und/oder Ablauf WF1 und/oder Reihenfolge und/oder damit zusammenhängende Eingaben eines Benutzers B). Ein auf diese Weise trainiertes DNN kann bei weiteren bevorzugten Ausführungsformen z.B. dazu verwendet werden, wenigstens Teile der Konfigurationsdaten KD und/oder die Reihenfolge bzw. den Ablauf WF1, insbesondere automatisch, zu ermitteln, z.B. basierend auf den bei dem Training erlernten Informationen und/oder den Eingangsdaten. Nach dieser (automatischen) Ermittlung kann bei weiteren bevorzugten Ausführungsformen sodann das der Schritt 220 gemäß Figur 1 ausgeführt werden.

Weitere bevorzugte Ausführungsformen beziehen sich auf eine Verwendung des Verfahrens gemäß den Ausführungsformen und/oder der Vorrichtung 100 (Fig. 2) gemäß den Ausführungsformen und/oder des Computerprogramms PRG, PRG' gemäß den Ausführungsformen für wenigstens eines der folgenden Elemente: a) insbesondere automatische bzw. zumindest teilweise automatisierte, Verarbeitung von mit einem Erzeugnis E, KS assoziierten Bilddaten BD, DB1 (Fig. 5A), b) Bereitstellung eines Ablaufs WF1 für eine Verarbeitung von mit einem Erzeugnis E, KS assoziierten Bilddaten BD, c) zumindest zeitweises und/oder teilweises Ersetzen eines manuellen Bildbearbeitungsprozesses (und/oder Überprüfen oder Nachvollziehen eines manuellen Bildbearbeitungsprozesses), d) Bereitstellung von Produktbildern DB2 (Fig. 5B), insbesondere bezüglich Kleidungsstücken KS und/oder Accessoires, insbesondere für Onlinekataloge und/oder elektronische Produktübersichten, e) Bereitstellung, insbesondere automatische Erzeugung von, Farbschnipseln FS, f) Verkettung von Bildverarbeitungsschritten unter Verwendung verschiedener, insbesondere künstlicher, insbesondere tiefer, neuronaler Netzwerke DNN.

Figur 6 zeigt schematisch Bilddaten gemäß weiteren bevorzugten Ausführungsformen. Bei den abgebildeten Bilddaten handelt es sich vorliegend um eine Teilmenge FS der Bilddaten BD, z.B. des ersten Digitalbilds DB1 oder eines - z.B. mittels eines oder mehreren Verarbeitungsschritten VS daraus abgeleiteten - zweiten Digitalbilds DB2. Diese Teilmenge FS kann bei weiteren bevorzugten Ausführungsformen auch als Farbschnipsel FS bezeichnet werden und kann z.B. dazu dienen, eine Farbe und/oder ein Muster eines Erzeugnisses, z.B. Kleidungsstücks KS, beispielhaft an dem betreffenden Teil des Farbschnipsel FS, anzugeben. Farbschnipsel FS sind gemäß weiteren bevorzugten Ausführungsformen z.B. für eine Farbauswahl und/oder Musterauswahl in einem Online-Angebot (z.B. Online-Shop) verwendbar, wobei z.B. neben einer Darstellung des eigentlichen Produkts, z.B. in Form des zweiten Digitalbilds DB2 gemäß Fig. 5B, mehrere Farbschnipsel FS mit jeweils unterschiedlicher Farbe darstellbar sind.

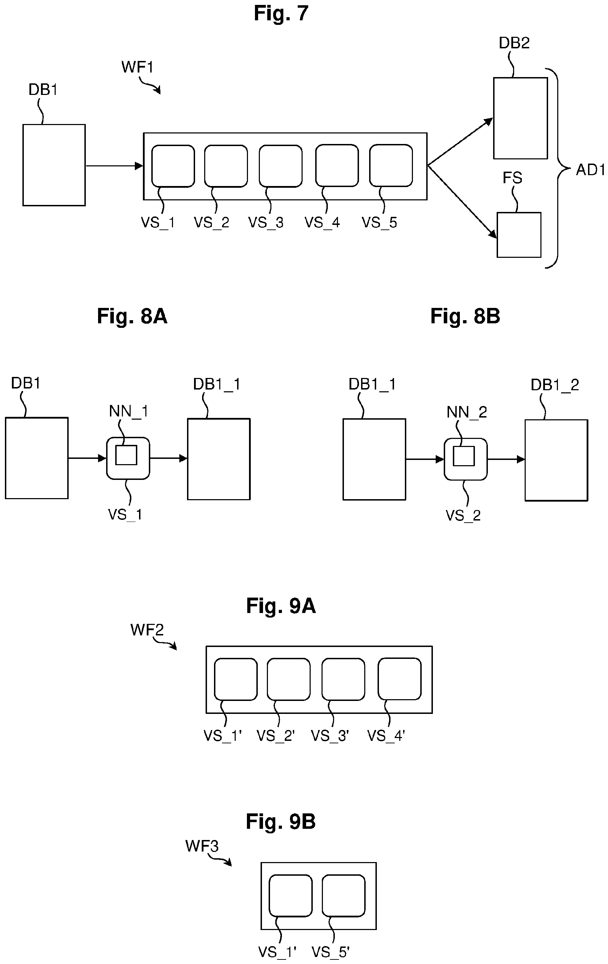

Bei weiteren bevorzugten Ausführungsformen können ein oder mehrere Farbschnipsel FS vorteilhaft auch, insbesondere automatisch, unter Verwendung wenigstens eines Verarbeitungsschritts VS (Fig. 1) gemäß den Ausführungsformen, erzeugt bzw. aus den Bilddaten ermittelt werden. Dies ist weiter unten unter Bezugnahme auf Fig. 9B näher beschrieben.

Figur 7 zeigt schematisch ein vereinfachtes Blockdiagramm gemäß weiteren bevorzugten Ausführungsformen. Abgebildet ist ein Ablauf bzw. Workflow WF1, wie er z.B. gemäß Schritt 230 aus Fig. 3C erhalten werden kann. Der Workflow WF1 weist mehrere (vorliegend beispielhaft fünf) (Bild-)Verarbeitungsschritte VS_1, VS_2, VS_3, VS_4, VS_5 auf und dient beispielsweise dazu, aus den als Eingangsdaten ED (Fig. 1) erhaltenen Bilddaten BD, die z.B. das erste Digitalbild DB1 gemäß Fig. 5A charakterisieren, das zweite Digitalbild DB2 und einen zugehörigen Farbschnipsel FS zu ermitteln. Das zweite Digitalbild DB2 und der zugehörige Farbschnipsel FS bilden somit Ausgangsdaten AD1, wie sie mittels des Workflows WF1 aus dem ersten Digitalbild DB1 ermittelbar sind. Die Verarbeitungsschritte VS_1, VS_2, VS_3, VS_4, VS_5 gemäß Fig. 7 können beispielsweise eine Teilmenge der vorstehend beispielhaft unter Bezugnahme auf Fig. 3A, 3B beschriebenen Verarbeitungsschritte darstellen.

Bei weiteren bevorzugten Ausführungsformen wird wenigstens einer der Verarbeitungsschritte VS_1, VS_2, VS_3, VS_4, VS_5 gemäß Fig. 7, bzw. werden vorzugsweise mehrere der Verarbeitungsschritte VS_1, VS_2, VS_3, VS_4, VS_5 gemäß Fig. 7, weiter vorzugsweise alle Verarbeitungsschritte VS_1, VS_2, VS_3, VS_4, VS_5 gemäß Fig. 7, jeweils unter Verwendung eines, insbesondere künstlichen, neuronalen Netzwerks ausgeführt, insbesondere unter Verwendung eines künstlichen tiefen neuronalen Netzwerks DNN (Fig. 4).

Figur 8A zeigt schematisch ein vereinfachtes Blockdiagramm gemäß weiteren bevorzugten Ausführungsformen, bei dem ein erster Verarbeitungsschritt VS_1 unter Verwendung eines ersten DNN NN_1 das erste Digitalbild DB1 (s. auch Fig. 5A) einer Freistellungsoperation unterzieht. Dieser Verarbeitungsschritt VS_1 hat insbesondere die Wirkung, dass ein dadurch erhaltenes Digitalbild DB1_1 nicht mehr die an sich unerwünschten Objekte OBJ des Eingangsbilds DB1 (s. auch Fig. 5A) aufweist, bzw. diese ausblendet werden, so dass insbesondere direkt auf der freigestellten Person P, insbesondere einschließlich dem zu präsentierenden Erzeugnis E, KS, weitergearbeitet werden kann.. Nach der wie vorstehend beschrieben ausgeführten Freistellung VS_1 kann das dadurch erhaltene Digitalbild DB1_1 z.B. wenigstens einem weiteren Verarbeitungsschritt VS_2 (nicht in Fig. 8A gezeigt, s. Fig. 8B) unterworfen werden, wofür z.B. ein weiteres bevorzugt tiefes künstliches neuronales Netzwerk NN_2 verwendbar ist, s. Fig. 8B.

Bei weiteren bevorzugten Ausführungsformen kann wenigstens ein Verarbeitungsschritt z.B. auch zum Gegenstand haben, einen Alpha-Kanal (für Transparenz-Effekte) in das Digitalbild einzufügen, wodurch z.B. gezielt Teile des Digitalbilds maskierbar sind.

Bei weiteren bevorzugten Ausführungsformen kann ein dem Ablauf gemäß Fig. 8A entsprechender Workflow Einstellungen aufweisen, die z.B. einen Betrieb des DNN NN_1 steuern. Z.B. können die Einstellungen eine Angabe aufweisen, ob das Digitalbild DB1 (Teile) eine(r) Person P aufweist, und/oder welcher Typ von Erzeugnis E bzw. Kleidungsstück KS in dem Digitalbild DB1 enthalten ist. Diese Einstellungen können vorteilhaft für ein präzises Freistellen sowohl der Person P als auch des Kleidungsstücks KS während des Verarbeitungsschritts VS_1 genutzt werden. Beispielsweise können die genannten Einstellungen vorliegend die Information enthalten, dass eine Person P abgebildet ist (und bei dem Freistellen mit freigestellt werden soll), und dass es sich bei dem Erzeugnis E bzw. Kleidungsstück KS um eine Tunika bzw. ein Kleid handelt (oder z.B. um einen Hosenanzug (nicht gezeigt)). Bei weiteren bevorzugten Ausführungsformen kann in Abhängigkeit dieser Einstellungen z.B. ein spezieller Typ eines DNN für das DNN NN_1 ausgewählt werden, der z.B. für das Freistellen von Personen mit Tunika bzw. Kleid trainiert bzw. optimiert ist. Alternativ oder ergänzend können in Abhängigkeit dieser Einstellungen auch Parameter bzw. Parametersätze (Gewichte, Parameter für Aktivierungsfunktionen, usw.) für das DNN NN_1 gewählt werden, um es für den Betrieb mit dem genannten Bildtyp zu optimieren. Bei weiteren bevorzugten Ausführungsformen können die Einstellungen zumindest teilweise aus den Konfigurationsdaten KD ermittelt werden.

Bei weiteren bevorzugten Ausführungsformen kann ein dem Ablauf gemäß Fig. 8A entsprechender Workflow alternativ beispielhaft Einstellungen aufweisen, die z.B. einen Betrieb des DNN NN_1 steuern, wobei die Einstellungen z.B. eine Angabe aufweisen können, ob das Digitalbild DB1 (Teile) eine(r)Person P aufweist, die im Ergebnis des Workflows sichtbar sein soll, und/oder eine Büste beinhaltet, die z.B. im Ergebnis des Workflows nicht mehr sichtbar sein soll.

Das weitere DNN NN_2 gemäß Fig. 8B ist z.B. dazu ausgebildet, aus dem als Eingangsdaten für den weiteren Verarbeitungsschritt VS_2 vorliegenden Digitalbild DB1_1 einen Farbschnipsel FS (Fig. 7) zu erzeugen, der dem weiteren Digitalbild DB1_2 (Fig. 8B) entspricht.

Bei weiteren bevorzugten Ausführungsformen kann ein dem Ablauf gemäß Fig. 8B entsprechender Workflow Einstellungen aufweisen, der z.B. einen Betrieb des DNN NN_2 steuert. Z.B. können die Einstellungen eine Angabe aufweisen, wie groß der Farbschnipsel DB1_2 sein soll (z.B. Breite und/oder Höhe), und/oder ob er bevorzugt einen gemusterten Teil des Kleidungsstücks KS umfassen soll oder - sofern vorhanden - einen eher homogenen Teil (in diesem Fall weisen die Bilddaten des Farbschnipsels z.B. vergleichsweise geringe Frequenzen auf, gegenüber einem gemusterten Abschnitt).

Figur 9A zeigt schematisch ein vereinfachtes Blockdiagramm eines Workflows WF2 gemäß weiteren bevorzugten Ausführungsformen. Der Workflow WF2 umfasst vorliegend vier Verarbeitungsschritte VS_1' (Freistellung), VS_2' (Einfügen künstlicher Schatten), VS_3' (Hautretusche, vgl. Schritt 220f aus Fig. 3A), VS_4' (Setzen des durch die vorangehenden Verarbeitungsschritte VS_1', VS_2', VS_3' erhaltenen Digitalbilds auf eine Master-Vorlage, die z.B. ein vorgebbares Referenzformat und/oder eine Referenz-Hintergrundfarbe aufweist).

Figur 9B zeigt schematisch ein vereinfachtes Blockdiagramm eines weiteren Workflows WF3 gemäß weiteren bevorzugten Ausführungsformen. Der Workflow WF3 umfasst vorliegend zwei Verarbeitungsschritte VS_1' (Freistellung), VS_5' (Erstellung eines Farbschnipsels FS).

Das Prinzip gemäß den Ausführungsformen ermöglicht vorteilhaft die Bereitstellung und/oder Ausführung einer automatischen Bildverarbeitung bzw. von komplexen Workflows mit einer Mehrzahl, insbesondere Vielzahl, von automatischen Bildverarbeitungsschritten. Ein gemäß bevorzugten Ausführungsformen vorgegebener Ablauf bzw. Workflow ermöglicht eine besonders effiziente Nutzung der Ressourcen der Recheneinrichtung 102 bzw. der Vorrichtung 100, wobei insbesondere auch eine Vielzahl von Eingangsdaten bzw. Bilddaten bzw. Digitalbildern mit einem Workflow automatisch verarbeitbar ist. Damit sind z.B. auch umfangreiche Änderungen an einem umfassenden Datenbestand von Bilddaten (z.B. Änderung einer Hintergrundfarbe der Digitalbilder auf eine neue Referenz- Hintergrundfarbe und Hinzufügen von künstlichen Schatten) effizient und Ressourcen schonend ausführbar. Gegenüber konventionellen Ansätzen, die auf einer manuellen Abarbeitung von einzelnen Verarbeitungsschritten beruhen, ist durch das Prinzip gemäß den Ausführungsformen zudem vorteilhaft eine gleichbleibend hohe Qualität der Bildverarbeitung erzielbar.

## Patentansprüche

1. Verfahren zur Verarbeitung von Daten, insbesondere computerimplementiertes Verfahren zur Verarbeitung von mit einem Erzeugnis (E) assoziierten Bilddaten (BD), wobei das Verfahren aufweist: Bereitstellen (200) von Eingangsdaten (ED), wobei die Eingangsdaten Bilddaten (BD) wenigstens eines Erzeugnisses (E), insbesondere eines Kleidungsstücks (KS), aufweisen, Bereitstellen (210) von Konfigurationsdaten (KD), die mehrere Verarbeitungsschritte (VS) für die Eingangsdaten (ED) charakterisieren, Ausführen (220) der mehreren Verarbeitungsschritte (VS) mittels wenigstens einer Recheneinrichtung (102) in Abhängigkeit der Konfigurationsdaten (KD).

2. Verfahren nach Anspruch 1, wobei das Bereitstellen (200) der Eingangsdaten (ED) aufweist: Empfangen (200a), insbesondere mittels der Recheneinrichtung (102) und/oder einer die Recheneinrichtung (102) aufweisenden Vorrichtung (100), der Eingangsdaten (ED) von einer externen Einheit (10) und/oder einem Benutzer (B), wobei die Eingangsdaten (ED) insbesondere wenigstens ein Digitalbild (DB1) aufweisen.

3. Verfahren nach wenigstens einem der vorstehenden Ansprüche, wobei die Verarbeitungsschritte (VS) wenigstens zwei der folgenden Elemente aufweisen: a) Erkennen (220a) wenigstens eines Objekts, insbesondere des Erzeugnisses (E), insbesondere des Kleidungsstücks (KS), und/oder einer mit dem Erzeugnis (E) assoziierten Person (P), insbesondere einer Person (P), die das Kleidungsstück trägt, b) Freistellen (220b) wenigstens eines Objekts oder des wenigstens einen Objekts, c) Setzen (220c) wenigstens eines Objekts oder des wenigstens einen Objekts auf einen vorgebbaren Hintergrund, insbesondere auf einen weißen Hintergrund, d) Hinzufügen (220d) wenigstens eines Rahmens (R), insbesondere eines Rahmens um wenigstens ein Objekt oder das wenigstens eine Objekt, e) Hinzufügen (220e) wenigstens eines Schattens, insbesondere im Bereich von Schuhen einer bzw. der Person (P), f) Retuschieren (220f), insbesondere von Teilen wenigstens eines Objekts oder des wenigstens einen Objekts, insbesondere Retuschieren (220f) einer Haut der Person (P), g) Erzeugen (220g) eines Farbschnipsels (FS), h) Skalieren (220h), insbesondere in Abhängigkeit einer Referenzvorlage, i) Zuschneiden (220i), insbesondere in Abhängigkeit einer oder der Referenzvorlage, j) Kalibrieren (220j) von Farben bzw. eines Farbraums, k) Abrunden (220k) bzw. Glätten von Kanten, l) Erzeugen (2201) von Ausgangsdaten (AD), insbesondere wenigstens eines Ausgangsbilds (DB2), in einem vorgebbaren Grafikformat, m) Ermitteln (220m) einer das Erzeugnis (E, KS) charakterisierenden Farbe, n) Zuordnen (220n) einer oder der das Erzeugnis (E, KS) charakterisierenden Farbe zu einer vorgebbaren Klassifikation, o) Ermitteln (220o) einer mit den Bilddaten (BD) assoziierten Perspektive, p) Erkennen und/oder Auflisten von Produkteigenschaften aus dem Bild, insbesondere Digitalbild, q) Einfügen eines, insbesondere vergleichsweise kleinen, Bildausschnittes und/oder Schriftzuges, insbesondere in Form eines Wasserzeichens und/oder eines Stickers.

4. Verfahren nach wenigstens einem der vorstehenden Ansprüche, wobei die Verarbeitungsschritte (VS) automatisch, insbesondere ohne menschliche Interaktion, ausgeführt werden.

5. Verfahren nach wenigstens einem der vorstehenden Ansprüche, wobei wenigstens einer der Verarbeitungsschritte (VS), vorzugsweise mehrere der Verarbeitungsschritte (VS), weiter vorzugsweise alle Verarbeitungsschritte (VS), jeweils unter Verwendung eines, insbesondere künstlichen, neuronalen Netzwerks (NN_1, NN_2) ausgeführt werden, insbesondere unter Verwendung eines künstlichen tiefen neuronalen Netzwerks (DNN).

6. Verfahren nach wenigstens einem der vorstehenden Ansprüche, wobei die Konfigurationsdaten (KD) wenigstens eines der folgenden Elemente charakterisieren: a) eine Reihenfolge der Verarbeitungsschritte (VS), b) einen oder mehrere Parameter für wenigstens einen der Verarbeitungsschritte (VS), c) eine oder mehrere Eigenschaften von Ausgangsdaten (AD), die bei dem Ausführen (220) der mehreren Verarbeitungsschritte (VS) aus den Eingangsdaten (ED) erhalten werden.

7. Verfahren nach wenigstens einem der vorstehenden Ansprüche, weiter aufweisend: Vorgeben (230) eines Ablaufs (WF1) der mehreren Verarbeitungsschritte (VS) in Abhängigkeit der Konfigurationsdaten (KD), wobei der Ablauf (WF1) eine Reihenfolge der mehreren Verarbeitungsschritte (VS) aufweist, und wobei insbesondere der Ablauf (WF1) Einstellungen für wenigstens einen der mehreren Verarbeitungsschritte (VS) aufweist, und, optional, Ausführen (232) des Ablaufs.

8. Verfahren nach wenigstens einem der vorstehenden Ansprüche, wobei das Bereitstellen (210) der Konfigurationsdaten (KD) wenigstens eines der folgenden Elemente aufweist: a) Empfangen (210a), insbesondere mittels der Recheneinrichtung (102) und/oder einer die Recheneinrichtung (102) aufweisenden Vorrichtung (100), der Konfigurationsdaten (KD) von einer externen Einheit (10) und/oder einem Benutzer (B), b) Ausgeben (210b) einer Auswahl (AUSW) von Konfigurationsmöglichkeiten an einen Benutzer (B) und/oder eine externe Einheit (10) für wenigstens einen der mehreren Verarbeitungsschritte (VS), wobei insbesondere das Ausgeben (210b) der Auswahl (AUSW) von Konfigurationsmöglichkeiten an den Benutzer (B) das Erzeugen einer grafischen Benutzeroberfläche (GUI) aufweist.

9. Verfahren nach wenigstens einem der vorstehenden Ansprüche, wobei das Bereitstellen (210) der Konfigurationsdaten (KD) aufweist: Auswerten (210c) der Eingangsdaten (ED) und, insbesondere automatisches, Ermitteln wenigstens eines Teils der Konfigurationsdaten (KD) in Abhängigkeit der Auswertung (210c) der Eingangsdaten (ED).

10. Vorrichtung (100) zur Ausführung des Verfahrens nach wenigstens einem der vorstehenden Ansprüche.

11. Vorrichtung (100) nach Anspruch 10, aufweisend wenigstens eines der folgenden Elemente: a) eine wenigstens einen Rechenkern (102a) aufweisende Recheneinrichtung (102), b) eine Speichereinrichtung (104), c) eine, vorzugsweise bidirektionale, Schnittstelle (106), insbesondere Benutzerschnittstelle und/oder Datenschnittstelle.

12. Computerlesbares Speichermedium (SM), umfassend Befehle (PRG'), die bei der Ausführung durch einen Computer (102a) diesen veranlassen, das Verfahren nach wenigstens einem der Ansprüche 1 bis 9 auszuführen.

13. Computerprogramm (PRG), umfassend Befehle, die bei der Ausführung des Programms durch einen Computer (102a) diesen veranlassen, das Verfahren nach wenigstens einem der Ansprüche 1 bis 9 auszuführen.

14. Datenträgersignal (DCS), das das Computerprogramm (PRG) nach Anspruch 13 überträgt.

15. Verwendung des Verfahrens nach wenigstens einem der Ansprüche 1 bis 9 und/oder der Vorrichtung (100) nach wenigstens einem der Ansprüche 10 bis 11 und/oder des Computerprogramms (PRG) nach Anspruch 13 für wenigstens eines der folgenden Elemente: a) insbesondere automatische bzw. zumindest teilweise automatisierte, Verarbeitung von mit einem Erzeugnis (E) assoziierten Bilddaten (BD), b) Bereitstellung eines Ablaufs (WF1; WF2; WF3) für eine Verarbeitung von mit einem Erzeugnis (E) assoziierten Bilddaten (BD), c) zumindest zeitweises und/oder teilweises Ersetzen eines manuellen Bildbearbeitungsprozesses, d) Bereitstellung von Produktbildern, insbesondere bezüglich Kleidungsstücken und/oder Accessoires, insbesondere für Onlinekataloge und/oder elektronische Produktübersichten, e) Bereitstellung, insbesondere automatische Erzeugung von, Farbschnipseln (FS), f) Verkettung von Bildverarbeitungsschritten unter Verwendung verschiedener, insbesondere künstlicher, insbesondere tiefer, neuronaler Netze (DNN).
